(19) Europäisches Patentamt
European Patent Office
Office européen des brevets

(11) **EP 4 478 251 A1**

(12) **EUROPEAN PATENT APPLICATION**

(43) Date of publication:
**18.12.2024 Bulletin 2024/51**

(21) Application number: **23305959.1**

(22) Date of filing: **16.06.2023**

(51) International Patent Classification (IPC):
*G06N 3/045* (2023.01)   *G06N 5/01* (2023.01)
*G06N 7/01* (2023.01)   *G06N 20/20* (2019.01)

(52) Cooperative Patent Classification (CPC):
**G06N 5/01; G06N 3/045; G06N 7/01; G06N 20/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Digitalent**
**75017 Paris (FR)**
• **École Polytechnique**
**91120 Palaiseau (FR)**

• **CNRS (Centre National de la Recherche Scientifique)**
**75016 Paris Cedex 16 (FR)**

(72) Inventors:
• **ANTONENKO, Ekaterina**
**92160 ANTONY (FR)**
• **READ, Jese**
**91120 PALAISEAU (FR)**

(74) Representative: **Cabinet Nony**
**11 rue Saint-Georges**
**75009 Paris (FR)**

(54) **COMPUTER-IMPLEMENTED METHOD FOR BUILDING A LAYERED REGRESSOR CHAINS MODEL FOR MULTI-TARGET PREDICTION**

(57)    The present invention relates to a computer-implemented method for building a layered regressor chains model for performing a multi-target prediction in a machine learning system, using an input dataset of (N) samples, a predefined number (L) of target variables in said input dataset, a predefined number (K) of re-prediction layers, and a predefined number of connections (p) between every two consequent re-prediction layers, the method comprising at least the steps of:
- replicating said target variables as many times as the number K of re-prediction layers, creating a copy of each target variable for each next re-prediction layer,
- for each re-prediction layer, generating a random linear order on target vertices, and
adding p connections from random vertices of the *k*-th re-prediction layer to random vertices of the *(k + 1)*-th re-prediction layer, in order to build said layered regressor chains model and obtain a prediction result.

**Figure 2**

**Description**

**Technical field**

The invention relates to methods and systems to build a layered regressor chains model for performing a multi-target prediction in a machine learning system.

Multi-target prediction refers to machine learning models predicting values for multiple variables for each sample. Such techniques can be a solution to an extensively growing number of multi-output data science problems across the academy and industry areas, as described in articles 9 and 10, cited in the references list below.

**Prior art**

Multi-label classification has made considerable progress in the previous decade. Within this area, Classifier Chains is a family of methods that have proved to have high predictive performance, as described in articles 1 and 5 listed below. Compared to a naive approach with an independent classifier per label, known in the literature as binary relevance, advanced methods such as Classifier Chains outperform with reference to most metrics. This has been widely attributed to their ability to extract and exploit the dependencies between the targets, as well as other factors linked to multi-target modeling, as described in the above-mentioned articles 5 and 9.

Chaining methods can be adapted in a straightforward way to the regression context, however, their performance on regression tasks shows relatively few advantages compared to individual regression models. As one of the possible reasons for Regressor Chains underperforming, it is supposed that one pass of the chain through the targets may be insufficient for improving the performance of the model by capturing possible dependencies.

Given a dataset $\mathcal{D} = \{(\boldsymbol{x}^i, \boldsymbol{y}^i)\}_{i=1}^{N}$ of N samples, where each instance $x^i = [x^i_1,...,x^i_M]$ is associated with a vector $y^i = [y_1^i,...,y_L^i]$ of real numbers, it is interesting to build a model that can output predictions $y^{\wedge i} = [y^\wedge_1{}^i,...,y^\wedge_L{}^i]$ having D observed.

A straightforward approach is to build an independent model $h_j$ for each target $y_j$ such that

$$y^\wedge = [y^\wedge_1,...,y^\wedge_L] = [h_1(x),...,h_L(x)].$$

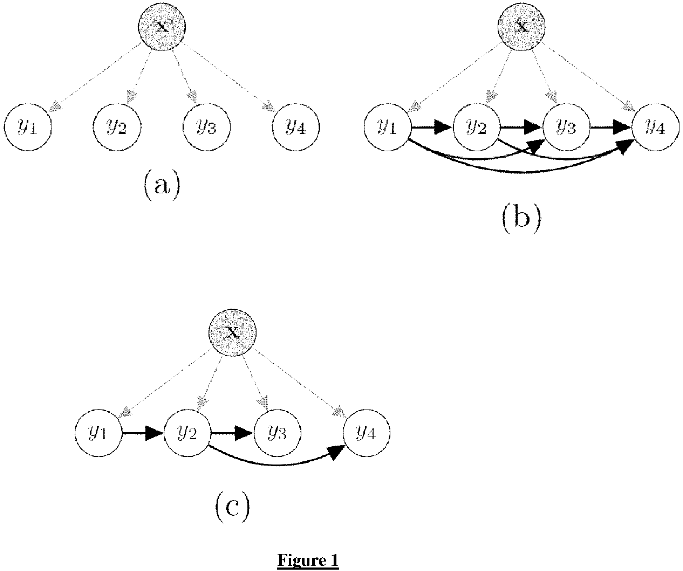

This approach is graphically represented in Figure 1a. In the classification context, this approach is known as the binary relevance method and has become a common baseline for multi-label tasks.

The initial idea of the Classifier Chains, as shown in Figure 1b and as described in article 4, was to arrange per-target models in a chain, such that the previous labels are used to train each next model in the training phase and the output prediction of one model becomes an additional feature for the subsequent models in the prediction phase. That is, given an instance x, we obtain a prediction as:

$$y^\wedge = [y^\wedge_1, ..., y^\wedge_L] = [h_1(x), h_2(x,y^\wedge_1), ..., h_L(x,y^\wedge_1,...,y^\wedge_{L-1})].$$

Different approaches have been suggested to optimize chain order including evolutionary algorithms and using correlation to build the best structure, as respectively described in articles 3 and 2. Another way to obtain better results for Regressor Chains is by using Ensembles of Regressor Chains (ERC) with random chain orders, as shown in article 8. An alternative non-chain approach is Regressor Stacking, as described in articles 6 and 8, which includes predictions of all single-target regressors as new features for a second round of training. Nested stacking may combine the advantages of Stacking and Chaining approaches and is described in article 8 for classification.

Our method combines some aspects of ERC and Nested Stacking approaches.

Although originally Classifier Chains had a fully-connected cascade structure, they can be made more flexible by using any directed acyclic graph (DAG), as shown in Figure 1c.

There is a need to further improve multi-target prediction by optimizing regressor chains.

The present invention notably seeks to meet this need.

**Disclosure of the invention**

One subject of the invention is a computer-implemented method for building a layered regressor chains model for performing a multi-target prediction in a machine learning system, using an input dataset of (N) samples, a predefined number (L) of target variables in said input dataset, a predefined number (K) of re-prediction layers, and a predefined number of connections (p) between every two consequent re-prediction layers, the method comprising at least the steps of:

- replicating said target variables as many times as the number K of re-prediction layers, creating a copy of each target variable for each next re-prediction layer,
- for each re-prediction layer $k = 1, 2,...,K$, generating a random linear order on target vertices $\{(k-1)L+1, (k-1)L+2, ..., (k-1)L+L\}$, and
- adding p connections from random vertices of the k-th re-prediction layer to random vertices of the $(k+1)$-th re-prediction layer, in order to build said layered regressor chains model and obtain a prediction result.

The computer-implemented method according to the invention provides a new extension of Regressor Chains, which may be called Layered Regressor Chains (LRC), and takes advantage of multiple layers of non-linearities. The targets are observed multiple times via several passes of a chain. The experimental results show an improvement in the performance of known Regressor Chains thanks to the invention.

Adding several cycles allows for improving the performance of known Regressor Chains. First, the linearly ordered multi-layered chains are implemented, where order on each cycle is generated as a random permutation of labels. Second, this step is extended by generating a random DAG order for each layer instead of a linear sequence. In each layer, either predictions obtained on earlier cycles or original labels may be advantageously added to the model as additional features. The first option is opposite to known Regressor Chains where ground-truth labels are used as additional features and more similar to Nested Stacking proposed in article 7 of the below references list.

To reduce the effects of possible variance which is induced by a particular order of a chain, ensembles of Layered Regressor Chains are used. Similar to most of the ensemble methods, a mean average of predictions as a final estimate per sample is preferably used.

While the layered structure may seem similar to known neural networks, the invention shows some significant differences compared to them. First, as opposed to neural networks, labels or predictions of labels from training data are used on each level. Second, since there is no back-propagation, any base estimator per label may be used, including non-differentiable ones. Third, the invention may work better for small datasets with small numbers of samples, as in general tendency observed in the literature.

After the first step of the method, in total, K*L target variables are advantageously available.

Said generated order, within each layer, may be either linear or a directed acyclic graph (DAG) order.

The method according to the invention is preferably performed several times to obtain different layered regressor chains models and different prediction results.

Advantageously, the mean average of the prediction results is used as a final estimate per each sample of the input dataset.

In each re-prediction layer, prediction results obtained on earlier cycles may be added to the model as additional features of the input dataset.

The prediction results obtained from the last re-prediction layer or from a fixed number of previous re-prediction layers or from all previous re-prediction layers may be added as additional features of the input dataset.

Support Vector Regression with RBF kernel may be used as a base estimator. However, any base estimator used in known Regressor Chains may be used. Support Vector Regression (SVR) is one of the standard choices and is known to perform well, as described in article 2 listed below.

Average Relative Root Mean Squared Error (aRRMSE), other variations of Mean Squared Error (MSE) or Uniform Cost Function (UCF) may be used as an evaluation metric.

In a preferred mode, average Relative Root Mean Squared Error is used. This metric is commonly used in multi-target regression and is expressed as follows:

$$\text{aRRMSE} = \frac{1}{L}\sum_{j=1}^{L}\sqrt{\frac{\sum_{i=1}^{N}(y_j^i - \hat{y}_j^i)^2}{\sum_{i=1}^{N}(y_j^i - \overline{y}_j)^2}},$$

where $\overline{y}_j$ is the mean value of the j-th target in the training data.

It has to be noted that a smaller aRRMSE value indicates better results. This metric, when used in multi-target regression, allows averaging errors between targets which may have different scales.

The method according to the invention may be performed for each individual sample in the prediction phase.

<u>System</u>

According to another one of its aspects, the invention also relates to a system for building a layered regressor chains model for performing a multi-target prediction in a machine learning system, using an input dataset of (N) samples, a predefined number (L) of target variables in said input dataset, a predefined number (K) of re-prediction layers, and a predefined number of connections (p) between every two consequent re-prediction layers, the system being configured in order to:

- replicate said target variables as many times as the number K of re-prediction layers, creating a copy of each target variable for each next re-prediction layer,
- for each re-prediction layer $k$ = 1, 2,...,$K$, generate a random linear order or DAG on target vertices $\{(k - 1)L+1, (k-1)L+2, ..., (k - 1)L+L\}$, and
- add $p$ connections from random vertices of the k-th re-prediction layer to random vertices of the $(k + 1)$-th re-prediction layer, in order to build said layered regressor chains model and obtain a prediction result.

The features described for the method apply to the system and vice versa.

Computer program product

According to another one of its aspects, the invention also relates to a computer program product for building a layered regressor chains model for performing a multi-target prediction in a machine learning system, using an input dataset of (N) samples, a predefined number (L) of target variables in said input dataset, a predefined number ($K$) of re-prediction layers, and a predefined number of connections (p) between every two consequent re-prediction layers, the computer program product comprising a support and stored on this support instructions that can be read by a processor, these instructions being configured to:

- replicate said target variables as many times as the number K of re-prediction layers, creating a copy of each target variable for each next re-prediction layer,
- for each re-prediction layer $k$ = 1,2,...,$K$, generate a random linear or DAG order on target vertices $\{(k - 1)L+1, (k-1)L+2, ..., (k - 1)L+L\}$, and
- add $p$ connections from random vertices of the k-th re-prediction layer to random vertices of the $(k + 1)$-th re-prediction layer, in order to build said layered regressor chains model and obtain a prediction result.

The features described for the method apply to the computer program and vice versa.

Method for multi-target prediction

According to another one of its aspects, the invention also relates to a computer-implemented method for performing a multi-target prediction in a machine learning system, using a layered regressor chains model built according to the method of the invention, as described above.

**Brief description of the drawings**

The invention may be better understood upon reading the following detailed description of nonlimiting implementation examples thereof and on studying the appended drawing, in which:

- figure 1, previously described, is a diagram illustrating different chain structures for a problem with L = 4 targets,

- figure 2 illustrates an example of a 3-layered random order according to the invention,

- figure 3 represents a comparison of chaining, that is to say training on labels, to stacking, that is to say training on predictions, and

- figure 4 represents graph results after testing different orders of targets per layer, linear, linear random and directed acyclic graph.

**Detailed description**

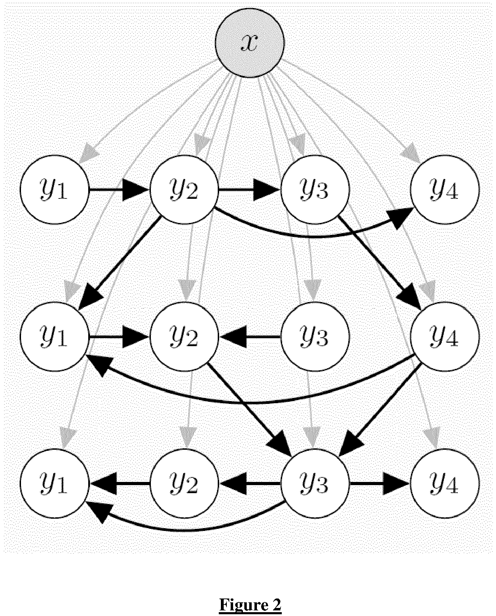

An example of a 3-layered random order according to the invention is given in Figure 2, for a number of targets L = 4 and a number of inter-layer connections p = 2. For each layer k = { 1,2,3 }, a random DAG order is generated and then p random connections are added between each two layers.

The performance of the invention is empirically measured on several standard real-world multi-target datasets. The datasets are briefly summarized in Table 1.

**Table 1**

| Dataset | Instances | Features | Targets |
|---------|-----------|----------|---------|
| andro | 49 | 30 | 6 |
| osales | 639 | 401 | 12 |
| scpf | 1137 | 23 | 3 |
| wq | 1060 | 16 | 14 |

Table 2 shows a version of the algorithm used to implement the method according to the invention.

---

**Algorithm 1** Random Layered DAG order for training Layered Regressor Chain (LRC) for $L$ targets, $K$ layers, $p$ links between neighbour layers

---

1: **procedure** RANDOMLAYEREDDAG($L, K, p$)
2:     Edges $\leftarrow$ {}
3:     **for** $k = 0, ..., K - 1$ **do**            ▷ $K$ independent layers
4:         preEdges $\leftarrow$ edges of random DAG of size $L$
5:         **for** $(u, v)$ in preEdges **do**
6:             $u, v \leftarrow u + L \cdot k, v + L \cdot k$
7:             add $(u, v)$ to Edges
8:     **for** $k = 1, ..., K - 1$ **do**            ▷ Add $p$ links between neighbour layers
9:         links $\leftarrow 0$
10:        **while** links $< p$ **do**
11:            $u \leftarrow$ random vertex in $\{(k - 1) \cdot L, ..., k \cdot L - 1\}$
12:            $v \leftarrow$ random vertex in $\{k \cdot L, ..., (k + 1) \cdot L - 1\}$
13:            **if** $(u, v)$ not in Edges **then**
14:                add $(u, v)$ to Edges
15:                links $\leftarrow$ links $+ 1$
16:     **return** Edges

---

## Table 2

As base estimators, Support Vector Regression with RBF kernel is used. As an evaluation metric, average Relative Root Mean Squared Error (aRRMSE) is used. All the methods are evaluated using a 5-fold cross-validation.

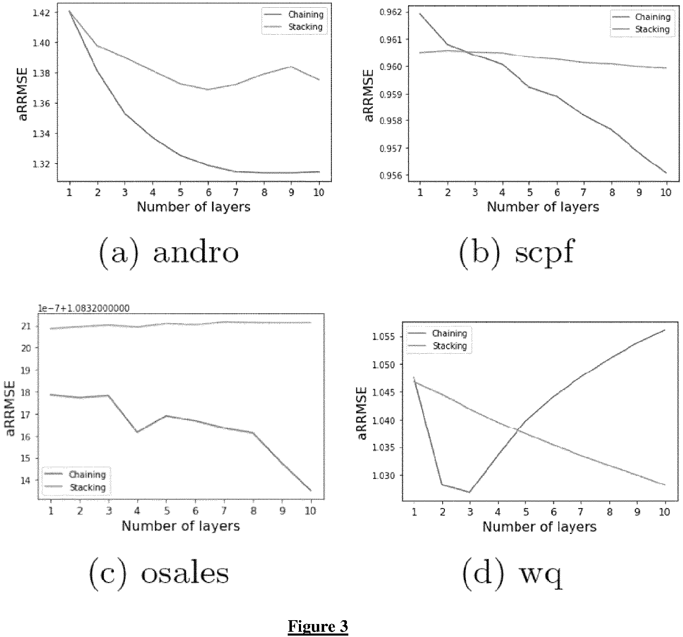

For each dataset listed in Table 1, Figure 3 shows the empirical results obtained with the method according to the invention based on chaining (in the training phase, labels are added as additional features) or stacking (in the training phase, predictions are added as additional features). In general, the chaining approach performs better.

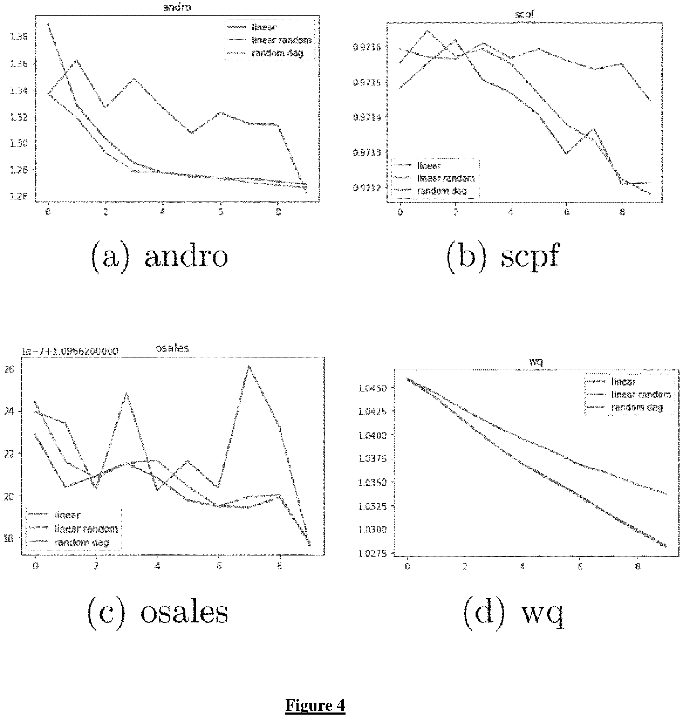

Figure 4 corresponds to experiments with labels ordering per layer: linear ordered, linear random, and random DAG. It can be seen that linear orderings, both fixed and random, show deeper and more stable improvement.

In both Figures 3 and 4, it can be observed that the layered structure of the invention has the potential to improve the performance of Regressor Chains.

The invention is not limited to the examples that have just been described and may be used for any multi-target prediction problem.

**References**

1. Dembczyn'ski, K., Waegeman, W., Hu¨llermeier, E.: An analysis of chaining in multi-label classification. In: ECAI: European Conference of Artificial Intelligence, vol. 242, pp. 294-299. IOS Press (2012)

2. Melki, G., Cano, A., Kecman, V., Ventura, S.: Multi-target support vector regression via correlation regressor chains. Information Sciences 415-416, 53 - 69 (2017). https://doi.org/10.1016/j.ins.2017.06.017

3. Moyano, J.M., Gibaja, E.L., Ventura, S.: An evolutionary algorithm for optimizing the target ordering in ensemble of regressor chains. In: 2017 IEEE congress on evolutionary computation (CEC). pp. 2015-2021. IEEE (2017)

4. Read, J., Pfahringer, B., Holmes, G., Frank, E.: Classifier chains for multi-label classification. Machine Learning 85(3), 333-359 (2011). https://doi.org/10.1007/s10994-011-5256-5

5. Read, J., Pfahringer, B., Holmes, G., Frank, E.: Classifier chains: A review and perspectives. Journal of Artificial Intelligence Research (JAIR) 70, 683-718 (2021)

6. Santana, E., Mastelini, S., Jr., S.: Deep regressor stacking for air ticket prices prediction. In: Anais do XIII Simpo'sio Brasileiro de Sistemas de Informac,a~o. pp. 25- 31. SBC, Porto Alegre, RS, Brasil (2017). https://doi.org/10.5753/sbsi.2017.6022, https://sol.sbc.org.br/index.php/sbsi/article/view/6022

7. Senge R, del Coz JJ, Hüllermeier E. Rectifying classifier chains for multi-label classification. arXiv preprint arXiv:1906.02915. 2019 Jun 7.

8. Spyromitros-Xioufis, E., Tsoumakas, G., Groves, W., Vlahavas, I.: Multi-target regression via input space expansion: treating targets as inputs. Machine Learning 104(1), 55 - 98 (2016). https://doi.org/10.1007/s10994-016-5546-z

9. Waegeman, W., Dembczyn'ski, K., Hu¨llermeier, E.: Multi-target prediction: a unifying view on problems and methods. Data Mining and Knowledge Discovery 33(2), 293-324 (Mar 2019). https://doi.org/10.1007/s10618-018-0595-5

10. Xu, D., Shi, Y., Tsang, I.W., Ong, Y.S., Gong, C., Shen, X.: Survey on multioutput learning. IEEE transactions on neural networks and learning systems 31(7), 2409-2429 (2019)

**Claims**

1. A computer-implemented method for building a layered regressor chains model for performing a multi-target prediction in a machine learning system, using an input dataset of (N) samples, a predefined number (L) of target variables in said input dataset, a predefined number (K) of re-prediction layers, and a predefined number of connections (p) between every two consequent re-prediction layers, the method comprising at least the steps of:

   - replicating said target variables as many times as the number K of re-prediction layers, creating a copy of each target variable for each next re-prediction layer,
   - for each re-prediction layer $k = 1, 2,...,K$, generating a random linear order on target vertices $\{(k - 1)L+1, (k - 1)L+2, ..., (k - 1)L+L\}$, and
   - adding p connections from random vertices of the k-th re-prediction layer to random vertices of the $(k + 1)$-th re-prediction layer, in order to build said layered regressor chains model and obtain a prediction result.

2. The method of claim 1, wherein said generated order, within each layer, is either linear or a directed acyclic graph (DAG) order.

3. The method of any one of the preceding claims, being performed several times to obtain different layered regressor chains models and different prediction results.

4. The method of the preceding claim, wherein the mean average of the prediction results is used as a final estimate per each sample of the input dataset.

5. The method of claims 3 or 4, wherein, in each re-prediction layer, prediction results obtained on earlier cycles are added to the model as additional features of the input dataset.

6. The method of any one of claims 3 to 5, wherein the prediction results obtained from the last re-prediction layer or from a fixed number of previous re-prediction layers or from all previous re-prediction layers are added as an additional feature of the input dataset.

7. The method of any one of the preceding claims, wherein Support Vector Regression with RBF kernel is used as a base estimator.

8. The method of any one of the preceding claims, wherein average Relative Root Mean Squared Error (aRRMSE), other variations of Mean Squared Error (MSE) or Uniform Cost Function (UCF) is used as an evaluation metric, average Relative Root Mean Squared Error being preferably used.

9. The method of any one of the preceding claims, being performed for each individual sample in the prediction phase.

10. System for building a layered regressor chains model for performing a multi-target prediction in a machine learning system, using an input dataset of (N) samples, a predefined number (L) of target variables in said input dataset, a predefined number (K) of re-prediction layers, and a predefined number of connections (p) between every two consequent re-prediction layers, the system being configured in order to:

    - replicate said target variables as many times as the number K of re-prediction layers, creating a copy of each target variable for each next re-prediction layer,
    - for each re-prediction layer $k = 1,2,...,K$, generate a random linear order on target vertices $\{(k - 1)L+1, (k - 1)L+2, ..., (k - 1)L+L\}$, and
    - add $p$ connections from random vertices of the k-th re-prediction layer to random vertices of the $(k + 1)$-th re-prediction layer, in order to build said layered regressor chains model and obtain a prediction result.

11. Computer program product for building a layered regressor chains model for performing a multi-target prediction in a machine learning system, using an input dataset of (N) samples, a predefined number (L) of target variables in said input dataset, a predefined number ($K$) of re-prediction layers, and a predefined number of connections (p) between every two consequent re-prediction layers, the computer program product comprising a support and stored on this support instructions that can be read by a processor, these instructions being configured to:

    - replicate said target variables as many times as the number K of re-prediction layers, creating a copy of each target variable for each next re-prediction layer,
    - for each re-prediction layer $k = 1,2,...,K$, generate a random linear order on target vertices $\{(k - 1)L+1, (k - 1)L+2, ..., (k - 1)L+L\}$, and
    - add $p$ connections from random vertices of the k-th re-prediction layer to random vertices of the $(k + 1)$-th re-prediction layer, in order to build said layered regressor chains model and obtain a prediction result.

12. A computer-implemented method for performing a multi-target prediction in a machine learning system, using a layered regressor chains model built according to the method of claims 1 to 9.

**Figure 1**

**Figure 2**

(a) andro

(b) scpf

(c) osales

(d) wq

**Figure 3**

(a) andro

(b) scpf

(c) osales

(d) wq

Figure 4

Europäisches
Patentamt

European
Patent Office

Office européen
des brevets

# EUROPEAN SEARCH REPORT

**Application Number**

EP 23 30 5959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASTELINI SAULO MARTIELLO ET AL: "DSTARS: A multi-target deep structure for tracking asynchronous regressor stacking", APPLIED SOFT COMPUTING, vol. 91, 13 June 2020 (2020-06-13), XP093106724, AMSTERDAM, NL ISSN: 1568-4946, DOI: 10.1016/j.asoc.2020.106215 Retrieved from the Internet: URL:https://www.sciencedirect.com/science/article/pii/S1568494620301551/pdfft?md5=2cf630b72e918e7c45fa2709575565e9&pid=1-s2.0-S1568494620301551-main.pdf> * the whole document * | 1-12 | INV. G06N3/045 G06N5/01 G06N7/01 G06N20/20 |
| A | ANTONENKO EKATERINA ET AL: "Multi-modal Ensembles of Regressor Chains for Multi-output Prediction", 20 April 2022 (2022-04-20), 20220420, PAGE(S) 1 - 13, XP047621569, * the whole document * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 8 December 2023 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- An analysis of chaining in multi-label classification. **DEMBCZYN'SKI, K.** ; **WAEGEMAN, W.** ; **HÜLLER-MEIER, E.** ECAI: European Conference of Artificial Intelligence. IOS Press, 2012, vol. 242, 294-299
- **MELKI, G.** ; **CANO, A.** ; **KECMAN, V.** ; **VENTURA, S.** Multi-target support vector regression via correlation regressor chains. *Information Sciences*, 2017, 415-416, 53-69, https://doi.org/10.1016/j.ins.2017.06.017
- An evolutionary algorithm for optimizing the target ordering in ensemble of regressor chains. **MOYANO, J.M.** ; **GIBAJA, E.L.** ; **VENTURA, S.** 2017 IEEE congress on evolutionary computation (CEC).. IEEE, 2017, 2015-2021
- **READ, J.** ; **PFAHRINGER, B.** ; **HOLMES, G.** ; **FRANK, E.** Classifier chains for multi-label classification. *Machine Learning*, 2011, vol. 85 (3), 333-359, https://doi.org/10.1007/s10994-011-5256-5
- **READ, J.** ; **PFAHRINGER, B.** ; **HOLMES, G.** ; **FRANK, E.** Classifier chains: A review and perspectives. *Journal of Artificial Intelligence Research (JAIR)*, 2021, vol. 70, 683-718

- Deep regressor stacking for air ticket prices prediction. **SANTANA, E.** ; **MASTELINI, S., JR., S.** Anais do XIII Simpo'sio Brasileiro de Sistemas de Informac,a~o.. SBC, 2017, 25-31
- **SENGE R** ; **DEL COZ JJ** ; **HÜLLERMEIER E**. Rectifying classifier chains for multi-label classification. *arXiv preprint arXiv:1906.02915.*, 07 June 2019
- **SPYROMITROS-XIOUFIS, E.** ; **TSOUMAKAS, G.** ; **GROVES, W.** ; **VLAHAVAS, I.** Multi-target regression via input space expansion: treating targets as inputs. *Machine Learning*, 2016, vol. 104 (1), 55-98, https://doi.org/10.1007/s10994-016-5546-z
- **WAEGEMAN, W.** ; **DEMBCZYN'SKI, K.** ; **HÜLLER-MEIER, E.** Multi-target prediction: a unifying view on problems and methods. *Data Mining and Knowledge Discovery*, March 2019, vol. 33 (2), 293-324, https://doi.org/10.1007/s10618-018-0595-5
- **XU, D.** ; **SHI, Y.** ; **TSANG, I.W.** ; **ONG, Y.S.** ; **GONG, C.** ; **SHEN, X.** Survey on multioutput learning. *IEEE transactions on neural networks and learning systems*, 2019, vol. 31 (7), 2409-2429